Europäisches Patentamt

European Patent Office

Office européen des brevets

(19)

(11) Veröffentlichungsnummer: **0 373 515**
**A2**

(12) # EUROPÄISCHE PATENTANMELDUNG

(21) Anmeldenummer: **89122614.4**

(51) Int. Cl.5: **B32B 5/24**

(22) Anmeldetag: **07.12.89**

(30) Priorität: **13.12.88 DE 3841868**
**10.02.89 DE 3903863**

(43) Veröffentlichungstag der Anmeldung:
**20.06.90 Patentblatt 90/25**

(84) Benannte Vertragsstaaten:
**AT BE CH DE ES FR GB GR IT LI LU NL SE**

(71) Anmelder: **J. H. Benecke AG**
**Beneckeallee 40**
**D-3000 Hannover 1(DE)**

(72) Erfinder: **Wagner, Werner Dr. Dipl.-Chem.**
**Harrenhorst 25**
**D-3052 Bad Nenndorf(DE)**
Erfinder: **Bruder, Axel Dr. Dipl.-Chem.**
**Im Wiesengrund 10a**
**D-3006 Burgwedel 1(DE)**
Erfinder: **Hildebrandt, Gustav**
**Wilhelm-Busch-Strasse 14**
**D-3262 Auetal(DE)**

(74) Vertreter: **Thömen, Uwe, Dipl.-Ing.**
**Patentanwalt U. Thömen Zeppelinstrasse 5**
**D-3000 Hannover 1(DE)**

(54) **Mehrschichtiges Polyurethan (PUR-) Polstermaterial.**

(57) Bei einem mehrschichtigen Polyurethan (PUR-) Polstermaterial ist die obere Deckschicht als hoch lichtechte und abriebfeste PUR-Schicht mit hoher Porösität ausgebildet. Daran schließt sich eine geschäumte Kaschierschicht an, die teilweise in die nachfolgende Schicht aus Vlies übergeht. Diese Vliesschicht besteht aus einem mit einem Binder imprägnierten Vlies mit Saug- und Speichereigenschaften. Die hochporöse Deckschicht kann Feuchtigkeit durchlassen und an die untere Vliesschicht abgeben, so daß die Deckschicht selbst trocken bleibt.

10

Fig. 1

## Mehrschichtiges Polyurethan (PUR-) Polstermaterial

Die Erfindung betrifft ein mehrschichtiges Polyurethan (PUR-) Polstermaterial gemäß dem Oberbegriff des Patentanspruchs 1.

Polstermaterial dieser Gattung wird vielfältig eingesetzt und beispielsweise für Autoinnenauskleidungen oder für Sitzmöbel, insbesondere für Bürostühle, verwendet. Dabei wird generell ein Polstermaterial angestrebt, welches sich trotz einer gewissen mechanischen Stabilität gut verarbeiten läßt, also dehnbar ist. Ein wichtiger Gesichtspunkt ist die erwünschte Eigenschaft, daß das Polstermaterial feuchtigkeitsauf nehmenden Charakter aufweist, um z.B. den Sitzkomfort bei Stühlen zu erhöhen. Ferner sollte das Polstermaterial auch noch abriebfest und lichtecht sein.

Bekannte mehrschichtige Polstermaterialien umfassen eine obere PUR-Schicht als Deckschicht mit einer darunter befindlichen PUR-Kaschierschicht, unter welcher schließlich noch eine dritte Schicht aus einem gerauhten Gewebe angeordnet ist. Diese letzte Schicht soll einen gewissen Zusammenhalt des gesamten Schichtaufbaus bewirken.

In der Praxis hat sich nun gezeigt, daß das bekannte mehrschichtige Polstermaterial in vielen Anwendungsfällen nicht hinreichend mechanisch stabil ist und der Gefahr durch beschädigungen aufgrund äußerer Einwirkungen unterliegt. Allein durch immer wieder auftretende Reibung kann die Oberfläche schon beschädigt werden. Außerdem führt die mechanische Instabilität häufig auch dazu, daß man die Sitzflächen von Stühlen schnell durchsitzt und daß mechanische Verformungen zurückbleiben.

Noch gravierender als die nur geringe mechanische Oberflächenstabilität ist bei dem bekannten Polster material aber der Umstand, daß beispielsweise beim längeren Sitzen durch Schwitzen entstehende Feuchtigkeit nur ungenügend von der Deckschicht aufgesaugt wird. Dadurch entstehen Schweißflächen, die zudem auch noch optisch als störend empfunden werden.

Der Erfindung liegt die Aufgabe zugrunde, ein mehrschichtiges Polyurethan (PUR-) Polstermaterial zu schaffen, welches zur Vermeidung der geschilderten Nachteile feuchtigkeitsaufsaugend, abriebfest und lichtecht ist.

Dieses Ziel erreicht die Erfindung durch den mehrschichtigen Aufbau des Polstermaterials gemäß den Merkmalen des Patentanspruchs 1.

In Versuchen hat sich gezeigt, daß das neue Polstermaterial in hohem Maße feuchtigkeitsaufsaugend ist. Die mikroporöse PUR-Schicht als Deckschicht erlaubt es aufgrund der hohen Porösität, Feuchtigkeit durchzulassen und an die Vliesschicht weiterzugeben. Da die PUR-Schicht die Feuchtigkeit nur durchläßt und sie an die Vliesschicht weitergibt, bleibt die PUR-Schicht selbst in vorteilhafter Weise trocken, wo durch den Sitzkomfort in hohem Maße erhöht wird, was durch das Zusammenwirken der im kennzeichnenden Teil des Patentanspruchs 1 genannten drei Schichten erreicht wird. Daneben konnte in Versuchen die Bestätigung gefunden werden, daß das neue Polstermaterial extrem abriebfest sowie lichtecht ist, daß also auch bei längerer Lichteinwirkung keine Verfärbungen auftreten.

Dadurch, daß eine sehr dünne PUR-Schicht verwendet wird, läßt sich die Mikroporösität erreichen. Wegen der Verbindung der PUR-Schicht mit der Vliesschicht über die geschäumte Kaschierschicht, welche teilweise in die Vliesschicht übergeht, kann die abriebfeste Eigenschaft der PUR-Schicht erreicht werden.

Als überraschend ist hervorzuheben, daß das neue Polstermaterial sowohl lichtecht als auch feuchtigkeitsaufsaugend ist, denn diese beiden Eigenschaften haben sich bisher bei den bekannten PUR-Polstermaterialien gegenseitig ausgeschlossen. Entweder war das Polstermaterial lichtecht, dann fehlte aber die feuchtigkeitsaufsaugende Eigenschaft, oder der lichtechte Charakter war nicht ausgeprägt, wenn das Polstermaterial feuchtigkeitsaufsaugend ausgebildet war.

In einer vorteilhaften Ausgestaltung der Erfindung ist unterhalb der Vliesschicht ein Trikot-Träger (20) angeordnet, der mechanisch oder chemisch mit der Vliesschicht verbunden wird.

Durch diesen Trikot-Träger erhält das Polstermaterial eine verbesserte mechanische Stabilität, und außerdem wirkt sich der Trikot-Träger auch vorteilhaft im Hinblick auf das Dehnungsverhalten bei zugleich hinreichender mechanischer Festigkeit des Polstermaterials aus, welches sich somit gut verarbeiten läßt.

In einer weiteren Ausführungsform der Erfindung befindet sich zwischen der Vliesschicht und dem unteren Trikot-Träger noch zusätzlich eine Schaumschicht aus üblichen PUR-Schaum.

Diese im Vergleich zu den anderen Schichten relativ dick ausgestattete Schaumschicht ist im wesentlichen für die vorteilhafte Eigenschaft einer Griffweichheit des neuen Polstermaterials verantwortlich, welches somit einen weichen und geschmeidigen Charakter besitzt. Dadurch wird der Sitzkomfort des Polstermaterials weiter gesteigert.

Im übrigen ist das mit der Erfindung geschaffene neue Polstermaterial auch hydrolysefest, d.h., die Gefahr einer Zersetzung unter Einwirkung von Feuchtigkeit und extremen Temperaturen ist vermieden.

Vorteilhafte Weiterbildungen und zweckmäßige Ausgestaltungen der Erfindung sind in den Unteransprüchen angegeben.

Anhand der in der Zeichnung dargestellten Ausführungsbeispiele wird die Erfindung nachfolgend näher erläutert. Es zeigen:

Fig. 1 eine schematische Querschnittsansicht eines PUR-Polstermaterials,

Fig. 2 und 3 jeweils unterscheidliche Ausführungsformen eines PUR-polstermaterials.

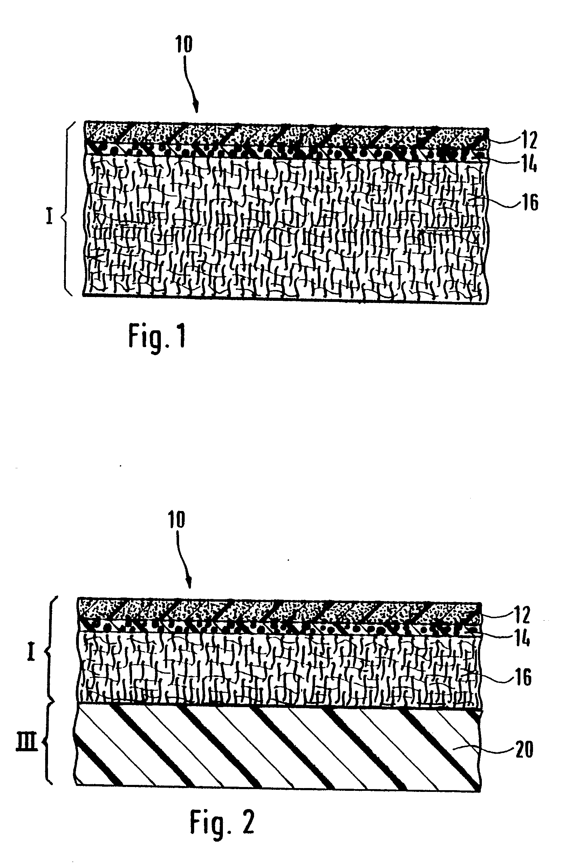

Das in Fig. 1 in einer Querschnittsansicht zeichnerisch dargestellte PUR-Polstermaterial 10 verdeutlicht einen dreischichtigen Aufbau. Aus Gründen der besseren zeichnerischen Darstellung sind die einzelnen Schichdicken nicht unbedingt maßstabsgetreu wiedergegeben.

Als Deckschicht ist eine mikroporöse PUR-Schicht 12 vorgesehen, deren Dicke bei bis zu 0,2 mm liegt. Die sehr hohe Porösität (mikroporös) der PUR-Schicht 12 läßt sich durch die Wasserdampfdurchlässigkeit von größer oder gleich 1 mg/cm² pro Stunde angeben.

An die PUR-Schicht 12 schließt sich eine geschäumte Kaschierschicht 14 aus einer Polyurethan-Dispersion an, wobei die Kaschierschicht 14 teilweise in die darunterliegende Vliesschicht 16 übergeht. Die meßbare Dicke der Kaschierschicht 14 beträgt bis zu 0,1 mm; ein restlicher Dickenateil ist wie erwähnt in die Vliesschicht 16 übergegangen.

Die sich an die Kaschierschicht 14 anschließende Vliesschicht 16 besitzt in der Form gemäß Fig. 1 eine Schichtdicke von bis zu 4 mm und ist mit einem üblichen Binder imprägniert, um eine Saug- und Speicherfähigkeit der Vliesschicht 16 zu gewährleisten.

Bei dem soweit beschriebenen Polstermaterial 10 ist ein hoher Sitzkomfort gegeben. Aufgrund der hohen Porösität kann die PUR-Schicht 12 Feuchtigkeit durchlassen und diese an die Vliesschicht 16 abgeben, die übrigens aus handelsüblichem Vlies gebildet wird. Da die Feuchtigkeit an die Vliesschicht 16 abgegeben wird, bleibt die PUR-Schicht 12 selbst trocken.

Fig. 2 zeigt einen vierschichtigen Aufbau des Polstermaterials 10, wobei sich unterhalb der Vliesschicht 16 ein Trikot-Träger 20 befindet. Bei dieser Ausführungsform kann die Dicke der Vliesschicht 16 gegenüber Fig. 1 gegebenenfalls verringert und mit einer Schichtdicke von bis zu 2 mm ausgebildet werden. Der Trikot-Träger 20 kann aus Polyamid, PES oder auch aus Baumwolle bestehen. Die Dicke des Trikot-Trägers 20 liegt bei Werten bis zu 1,5 mm.

Der als Bereich III bezeichnete Trikot-Träger 10 verleiht dem mehrschichtigen Aufbau des Polstermaterials 10 eine hinreichende mechanische Stabilität bei einer gleichwohl vorhandenen Dehnbarkeit des Polstermaterials 10, welches sich somit gut verarbeiten läßt.

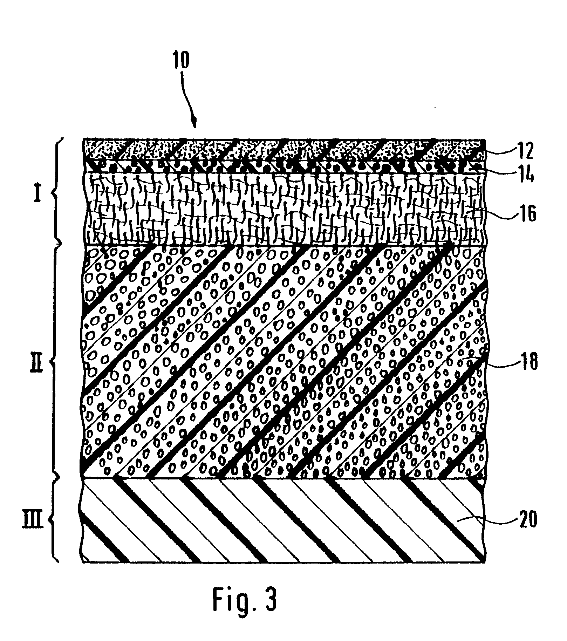

In Fig. 3 ist schließlich noch als weitere Ausführungsform ein mehrschichtiger Aufbau eines Polstermaterials 10 dargestellt, welches sich von Fig. 2 dadurch unterscheidet, daß zwischen der Vliesschicht 16 und dem Trikot-Träger 20 eine Schaumschicht 18 mit einer Dicke von bis zu 3 mm vorgesehen ist. Vorzugsweise läßt sich ein PUR-Schaum verwenden.

Die Schaumschicht 18 bildet einen mit II bezeichneten Bereich, der im wesentlichen für die Eigenschaft einer Griffweichheit verantwortlich ist und dem Polstermaterial 10 insgesamt einen weichen und geschmeidigen Charakter verleiht.

Insgesamt umfaßt das Polstermaetrial in der Ausführungsform gemäß Fig. 3 die Bereiche I, II und III. Dabei zeichnet der Bereich I im wesentlichen für den Sitzkomfort verantwortlich während - wie schon erwähnt - der Bereich II für die Griffweichheit und der Bereich III für die mechanische Festigkeit sorgt.

## Ansprüche

1. Mehrschichtiges Polyurethan (PUR-) Polstermaterial, mit einer porösen PUR-Deckschicht und einer Kaschierschicht, gekennzeichnet durch folgenden Schichtaufbau von oben nach unten:

a) eine hoch lichtechte und extrem abriebfeste PUR-Schicht (12) als Deckschicht, die so dünn gefertigt ist, daß sie eine hohe Porösität aufweist und mikroporös ausgebildet ist,

b) eine geschäumte Kaschierschicht (14), die teilweise in die nachfolgende Schicht aus Vlies übergeht,

c) eine Vliesschicht (16) aus einem mit einem Binder imprägnierten Vlies mit Saug- und Speichereigenschaften.

2. Polstermaterial nach Anspruch 1, dadurch gekennzeichnet, daß sich an die Vliesschicht (16) ein Trikot-Träger (20) für die mechanische Stabilität und das Dehnungsverhalten des kompletten Polstermaterials (10) anschließt.

3. Polstermaterial nach Anspruch2, dadurch gekennzeichnet, daß der Trikot Träger (20) mechanisch oder chemisch mit der Vliesschicht (16) verbunden ist.

4. Polstermaterial nach einem der vorhergehenden Ansprüche 1 - 3, dadurch gekennzeichnet, daß zwischen der Vliesschicht (16) und dem Trikot-Träger (20) eine Schaumschicht (18) aus üblichen PUR-Schaum angeordnet ist.

5. Polstermaterial nach einem der Ansprüche 1 - 4, dadurch gekennzeichnet, daß die mikroporöse PUR-Schicht (12) eine Wasserdampfdurchlässigkeit größer oder gleich etwa 1 mg/cm$^2$ pro Stunde besitzt.

6. Polstermaterial nach einem der Ansprüche 1 -5, dadurch gekennzeichnet, daß die geschäumte Kaschierschicht (14) aus PUR, vorzugsweise aus einer PUR-Dispersion besteht.

7. Polstermaterial nach einem der vorhergehenden Ansprüche 1 - 6, dadurch gekennzeichnet, daß die Vliesschicht (16) aus Polyamid (PA) oder Polypropylen (PP) oder PES besteht.

8. Polstermaterial nach einem der vorhergehenden Ansprüche 1 - 7, dadurch gekennzeichnet, daß der Trikot-Träger (20) aus Polyamid (PA) oder PES besteht.

9. Polstermaterial nach einem der vorhergehenden Ansprüche 1 - 8, dadurch gekennzeichnet, daß die Dicke der oberen PUR-Schicht (12) bis 0,2 mm beträgt.

10. Polstermaterial nach einem der vorhergehenden Ansprüche 1 - 9, dadurch gekennzeichnet, daß die Dicke der Kaschierschicht (14) bis 0,1 mm beträgt, wobei ein weiterer Dickenanteil in der nachfolgenden Vliesschicht (16) enthalten ist.

11. Polstermaterial nach einem der vorhergehenden Ansprüche 1 - 10, dadurch gekennzeichnet, daß die Dicke der Vliesschicht (16) bis 2 mm beträgt.

12. Polstermaterial nach einem der vorhergehenden Ansprüche 1 - 11, dadurch gekennzeichnet, daß die Dicke der Schaumschicht (18) bei bis 3 mm liegt.

13. Polstermaterial nach einem der vorhergehenden Ansprüche 1 - 12, dadurch gekennzeichnet, daß die Schichtdicke des Trikot-Trägers (20) bis 1,5 mm beträgt.

Fig. 1

Fig. 2

Fig. 3